# EUROPEAN PATENT SPECIFICATION

(11) **EP 0 781 663 B1**
(45) Date of publication and mention of the grant of the patent: **19.07.2000**
(21) Application number: 96308991.7
(22) Date of filing: 11.12.1996
(51) Int. Cl.: B41J 2/455

(54) **Color xerographic printer with multiple linear arrays of surface emitting lasers with dissimilar wavelengths**
Farbxerographischer Drucker mit vielfachen linearen Reihen von oberflächenemittierenden Lasern mit verschiedenen Wellenlängen
Imprimante xérographique en couleur avec des séries linéaires multiples de lasers à émission par la surface avec des longueurs d'onde dissimilaires

(30) Priority: 22.12.1995 US 577794
(43) Date of publication of application: 02.07.1997
(73) Proprietor: XEROX CORPORATION, Rochester, New York 14644 (US)
(72) Inventor: Paoli, Thomas L., Los Altos, California 94022 (US); Fisli, Tibor, Los Altos Hills, California 94022 (US)
(74) Representative: Rackham, Stephen Neil

(56) References cited:
- EP-A- 0 589 652
- US-A- 5 402 436
- US-A- 5 461 413
- IEICE TRANSACTIONS ON ELECTRONICS, vol. E78-C, no. 1, 1 January 1995, pages 22-27, XP000495079 OGURA I ET AL: "A MULTIPLE WAVELENGTH VERTICAL-CAVITY SURFACE-EMITTING LASER (VCSEL) ARRAY FOR OPTICAL INTERCONNECTION"
- IBM TECHNICAL DISCLOSURE BULLETIN, vol. 33, no. 2, 1 July 1990, pages 307-310, XP000123631 "HIGH-SPEED AND HIGH-RESOLUTION LASER PRINTER"

## Description

This invention relates to a color xerographic printer and, more particularly, to a color xerographic printer with a monolithic structure of multiple linear arrays of surface emitting lasers with dissimilar wavelengths to simultaneously expose widely separated positions on the same or different photoreceptors.

A Raster Output Scanner (ROS) or a Light Emitting Diode (LED) print bar, known as imagers, used in xerographic printers are well known in the art such as in EP-A-0 589 652 and US-A-5 402 436. The ROS or the LED print bar is positioned in an optical scan system to write an image on the surface of a moving photoreceptor belt.

In a ROS system, a modulated beam is directed onto the facets of a rotating polygon mirror which then sweeps the reflected beam across the photoreceptor surface. Each sweep exposes a raster line to a linear segment of a video signal image.

However, the use of a rotating polygon mirror presents several inherent problems. Bow and wobble of the beam scanning across the photoreceptor surface result from imperfections in the mirror or even slight misangling of the mirror or from the instability of the rotation of the polygon mirror. These problems typically require complex, precise and expensive optical elements between the light source and the rotating polygon mirror and between the rotating polygon mirror and the photoreceptor surface. Additionally, optically complex elements are also needed to compensate for refractive index dispersion that causes changes in the focal length of the imaging optics of the ROS.

The LED print bar generally consists of a linear array of light emitting diodes. Each LED in the linear array is used to expose a corresponding area on a moving photoreceptor in response to the video data information applied to the drive circuits of the print bars. The photoreceptor is advanced in the process direction to provide a desired image by the formation of sequential scan lines.

In a color xerographic printer, a plurality of the light emitting elements of the LED print bars are imaged to a photoreceptor surface usually by closely spaced radially indexed glass fibers known as "selfoc" lenses.

Printing with LED bars requires a precisely fabricated "selfoc" lens for each light emitting element. Each "selfoc" lens array must be straight and parallel with highly polished input and output facets. Each lens within the array must have the same focal length and throughput efficiency. Even if these requirements are met, the "selfoc" lenses have short focal lengths and therefore must be positioned close to the photoreceptor surface where the lenses can collect toner and thereby require an additional cleaning mechanism. Due to their optical characteristics, the depth of focus of a "selfoc" lens is very short and consequently requires very precise placement to produce uniform spot exposures on the scan line.

Light emitting diodes, by their very nature, have a large angular divergence, a broad spectrum and are unpolarized, all factors which severely limit their use in color printing systems using a wavelength or polarization based scan line separation technique. Prior LED print bar xerographic line printers have taught only line exposure at a single position on one photoreceptor.

US-A-5 337 074 and US-A-5 461 413 disclose using a single linear surface emitting laser array as the light source for a line printer.

A laser array such as known from "High-Speed and High-Resolution Laser Printer", IBM Technical Disclosure Bulletin XXXIII (2), 1990, 307-310 has a smaller angular beam divergence than an LED array and therefore provides a higher power throughput efficiency. A laser array also has a smaller radiating aperture (source size) than an LED array and therefore can provide increased spot density. The narrow spectrum of laser beams enables optical separation of the laser beams as taught in the present application. The broad spectrum precludes similar separations of LED emissions.

It is an object of this invention to provide a color xerographic line printer with simple and inexpensive optics and a single light source.

It is yet another object of this invention to provide a color xerographic line printer with a multiple laser array light source with dissimilar wavelengths.

In accordance with one aspect of the present invention as defined in the claims below, there is provided a color xerographic line printer comprising:- at least one photoreceptor, at least two linear laser arrays for emitting at least two modulated light beams of differing wavelengths, imaging lens means for imaging each modulated light beam onto at least one of the photoreceptor, and wavelength separation means for separating each modulated light beam onto a specific region of said at least one photoreceptor to simultaneously expose a full scan line thereon.

In the present invention, a color printer uses multiple linear arrays of surface emitting lasers of differing wavelengths to simultaneously expose widely separated positions on the same or different photoreceptors. A highlight color printer would use two linear laser arrays while a full color printer would use four linear laser arrays.

Each array is imaged to the photoreceptor by the same optical system. The multiple linear arrays can be closely spaced in a monolithic structure or assembled in a precise unit. Light emitting elements in each array can be spaced or staggered for line imaging at the printed pixel density.

Other objects and attainments together with a fuller understanding of the invention will become apparent and appreciated by referring to the following description, by way of example only, taken in conjunction with the accompanying drawings in which:-
Figure 1 is a schematic illustration of the cross-section scan plane view of a xerographic printer with a monolithic linear array of vertical cavity surface emitting lasers (VCSELs) which are described in L. Ogara et al, "A Multiple Wavelength Vertical-Cavity Surface-Emitting Laser (VCSEL) Array for Optical Interconnection", IEICE Transactions on Electronics E78-C (1), 1995, 22-27.
Figure 2 is a schematic illustration of the cross-section cross-scan plane view of the xerographic printer with a monolithic linear array of vertical cavity surface emitting lasers (VCSELs) shown in Figure 1;
Figure 3 is a schematic illustration of the cross-section side view of the monolithic linear array of vertical cavity surface emitting lasers (VCSELs) of the xerographic printer shown in Figures 1 and 2;
Figure 4 is a schematic illustration of the cross-section side view of a highlight color xerographic printer with monolithic multiple linear arrays of vertical cavity surface emitting lasers (VCSELs) and two photoreceptors formed according to the present invention;
Figure 5 is a schematic illustration of the cross-section side view of the monolithic multiple linear arrays of vertical cavity surface emitting lasers (VCSELs) shown in Figure 4 formed according to the present invention;
Figure 6 shows the reflection/transmission characteristics of a wavelength beam separator (as used in various embodiments of the present invention);
Figure 7 is a schematic illustration of the cross-section side view of an alternate embodiment of a highlight color xerographic printer with monolithic multiple linear arrays of vertical cavity surface emitting lasers (VCSELs) and a single photoreceptor formed according to the present invention;
Figure 8 is a schematic illustration of the cross-section side view of an alternate embodiment of the highlight color xerographic printer with monolithic multiple linear arrays of vertical cavity surface emitting lasers (VCSELs) and beam separators and two photoreceptors formed according to the present invention;
Figure 9 shows the absorption/transmission characteristics of a narrow bandpass filter as used in the highlight color xerographic printer shown in Figure 8;
Figure 10 is a schematic illustration of the cross-section side view of a full color xerographic printer with monolithic multiple linear arrays of vertical cavity surface emitting lasers (VCSELs) and four photoreceptors formed according to the present invention;
Figure 11 is a schematic illustration of the cross-section side view of the monolithic multiple linear arrays of vertical cavity surface emitting lasers (VCSELs) shown in Figure 10 formed according to the present invention;
Figure 12 shows the reflection/transmission characteristics of a wavelength beam separator of the full color xerographic printer shown in Figure 10; and
Figure 13 is a schematic illustration of the cross-section side view of the nonmonolithic structure combination of two monolithic multiple linear arrays of vertical cavity surface emitting lasers (VCSELs) formed according to the present invention.

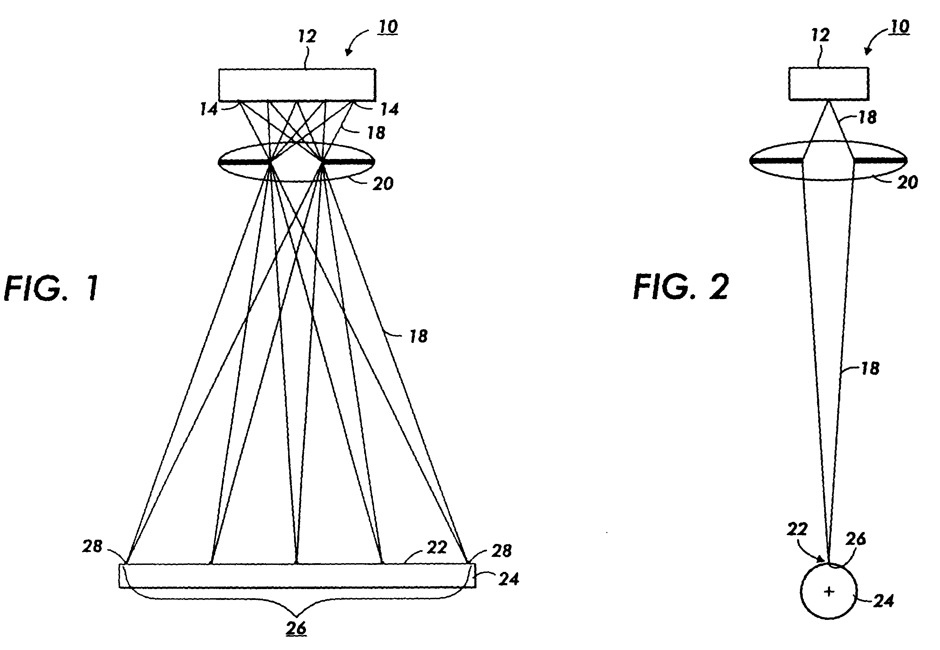

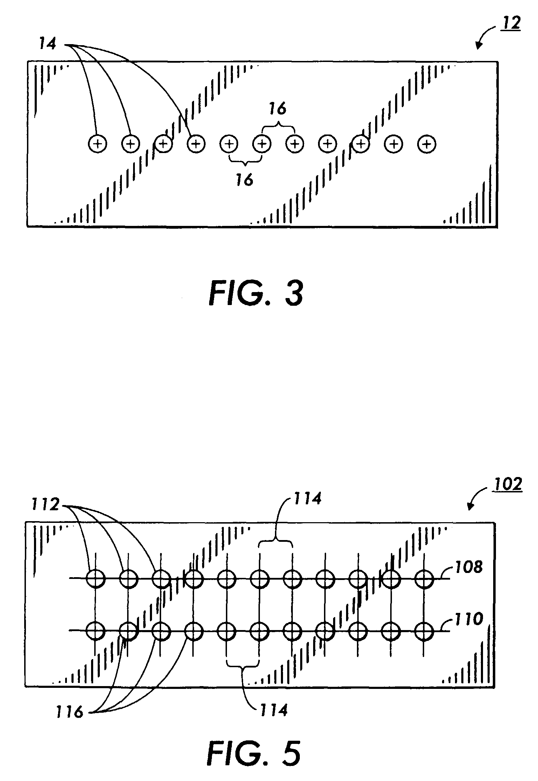

Reference is now made to Figures 1 and 2 wherein is described the basic xerographic printer 10 as used in the illustrated embodiments of the present invention. Figures 1 and 2 show the line projection architecture of the printer 10. The optical source of the printer 10 is a linear array 12 of vertical cavity surface emitting lasers (VCSELs) 14, as shown in Figure 3, all emitting nominally the same wavelength λ₁ and same polarization state.

The individual VCSELs 14 in the array 12 shown in Figure 3 are arranged linearly in the scan plane direction with equal center to center spacing 16 between the individual VCSELs 14. The linear VCSEL array 12 is monolithic in the preferred embodiment.

The monolithic VCSEL arrays can be made in many different ways. A high density array of vertical cavity surface emitting lasers can emit from the epitaxial side of the array, as described in US-A-5 062 115. A high density array of vertical cavity surface emitting lasers can also emit from the substrate side of the array, as described in US-A-5 216 263. In both cases, all elements of the array emit at substantially the same wavelength and have no provision for control of the polarization state. For embodiments of the present invention, the VCSELs 14 in array 12 include polarization control such that each element emits in the same polarization state in order to eliminate pixel to pixel nonuniformity from polarization dependence in the transmission/reflection characteristics of optical filters and beam separators.

Returning to the line projection architecture of the the basic xerographic printer 10 shown in Figures 1 and 2, the linear array 12 of vertical cavity surface emitting lasers (VCSELs) 14 will emit partially overlapping beams 18 of the same wavelength λ₁ and the same polarization state. The VCSEL elements have a beam divergence of about 8 to 10 degrees at the 50% power points and are focused by an imaging lens system 20 onto surface 22 of the photoreceptor 24.

As shown in Figure 1, each individual beam 18 from each individual VCSEL 14 in the linear array 12 is focused to a different individual pixel point 28 along a scan line 26 on the photoreceptor surface 22 in the scan plane. As shown in Figure 2, the beams 18 from the linear array 12 are focused by projection (imaging) lens 20 in both the scan and cross-scan plane to form a single scan line 26 on the photoreceptor surface 22. All the VCSELs in the linear array will be addressed at the same time so that the linear array will simultaneously expose the entire line on the photoreceptor 24.

The imaging lens 20 receives the slightly diverging beams 18 from the array 12 and focuses the beams onto the photoreceptor surface 22. The imaging lens 20 also magnifies the beams 18 into the pixels 28 on the photoreceptor surface 22. Typically, the imaging lens can be a relatively inexpensive projection lens with an appropriate magnification and F/no.

The optical magnification required for the imaging lens 22 is determined by the length of the array 12 because the full array must cover at least the width of a full sized page. Although it is possible to stitch separate subarrays together linearly to make a long array, monolithic structures are referred since the individual VCSELs in the array can be aligned during manufacture of the array, particularly photolithographic manufacture. Also, handling of the VCSEL array is minimized if one array is used rather than trying to bond linearly two or more separate subarrays together into one array.

A convenient length for monolithic VCSEL arrays would be 35 mm since such arrays can be grown uniformly and handled without serious breakage within present III-V diode technology and 35mm projection lenses for the imaging lens 20 are readily available.

In an illustrative embodiment of Figure 1 with a 35mm long VCSEL array 12 and a 35mm format projection/imaging lens 20, an optical magnification of approximately 8.5 is needed to cover a scan width of 297mm (11.7in). For an exposure density of 600spi (spots per inch) along the scan line 26 on the photoreceptor surface 22 in the scan plane, the distance between the spots on the photoreceptor surface is 42µm, which at 8.5X magnification requires a center-to-center spacing 16 in Figure 3 of 5µm between individual VCSELs 14 in the array 12. The above optical geometry provides the proper magnification for the scan width and for the spot (pixel) separations along the scan line 26 on the photoreceptor 24.

The spot size of each pixel 28 on the photoreceptor surface 22 shown in Figure 1 is determined by the F/no. of the imaging lens 20. The approximate F/no. required to resolve individual elements on 5µm centers at 780nm is given by F/no. equal to 5µm/1.0λ which equals 6.4. With this F/no., the lens 20 images the beam 18 of each laser element to a spot with a "full width half maximum" (FWHM) size of 42µm, i.e. distance between spots for 600spi. Thus, adjacent spots on the photoreceptor surface 22 overlap at FWHM. Since individual lasers in a VCSEL array 12 have a half power beam divergence of about 8 to 10 degrees, an imaging lens 20 with an F/no. which equals 6.4 will collect essentially all of the light emitted by each VCSEL element 14 at FWHM. If the light is to be collected at 1/e², the working F/no. of the lens 20 should be around 3.6. Therefore, the optical efficiency of this printing system 10 can be very high.

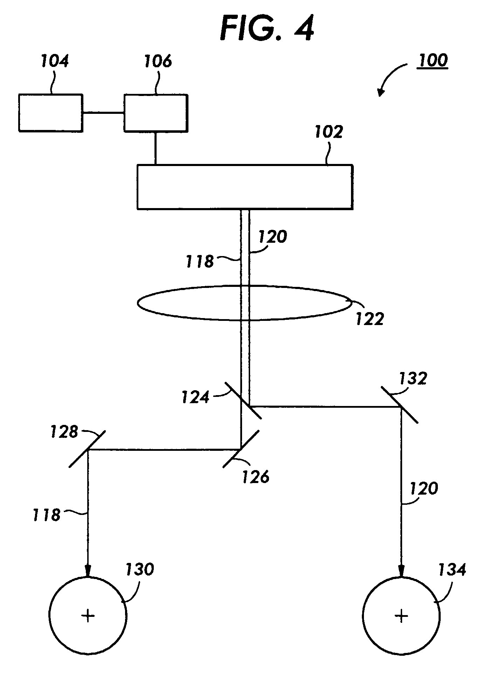

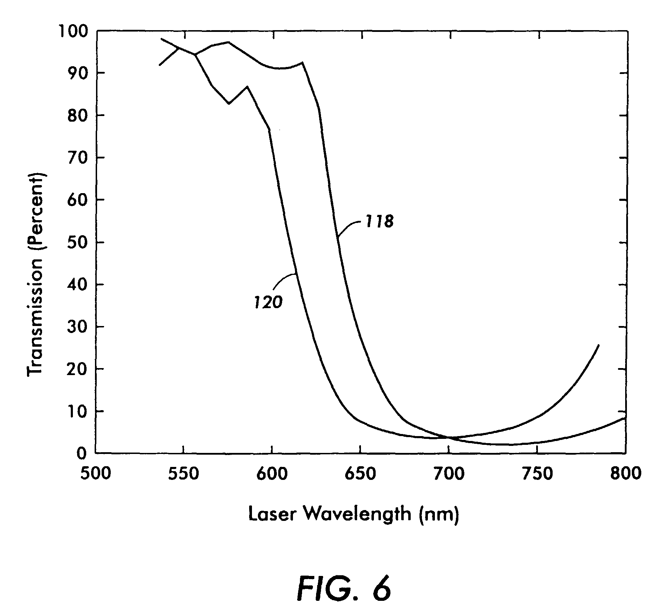

The highlight color printer 100 shown in Figure 4 utilizes a monolithic structure 102 of two linear arrays 108, 110 (as shown in Figure 5) of vertical cavity surface emitting lasers (VCSELs) 112, 116 to simultaneous expose two photoreceptors 130, 134 to enable one pass highlight color printing.

The monolithic array 102 of the printer 100 is selectively addressed by video image signals representing the image to be printed, processed through Electronic Sub System (ESS) 104 and controlled by drive circuit 106 to produce an intensity modulated beam from each individual VCSEL 112. 116 in the array 102.

The monolithic laser array structure 102 shown in Figure 5 consists of two linear VCSEL arrays 108 and 110 aligned parallel to each other within the monolithic array structure 102. The individual VCSELs 112 in the linear array 108 are arranged with equal center to center spacing 114 between the individual VCSELs 112. The individual VCSELs 116 in the linear array 110 are arranged with equal center to center spacing 114 between the individual VCSELs 116. Individual VCSELs 112 are aligned with individual VCSELs 116 in the direction orthogonal to the common linear direction of arrays 108 and 110. In the printer 100 shown in Figure 4, the monolithic array structure 102 is aligned so as to form two parallel scan lines orthogonal to the slow scan direction. In the preferred embodiment, the monolithic laser array structure 102 is symmetrically placed in both the slow scan and fast scan directions with respect to the optical axis of the imaging lens 122. Although symmetry is not required in principle, in practice it is highly recommended since a smaller object field for the projection lens permits simpler design and therefore lower cost.

The VCSELs 112 in the linear array 108 emit light at a first wavelength. The VCSELs 116 in the linear array 110 emit light at a second wavelength. The wavelength of the beam is determined by the photoreceptor, 780nm is good for infrared sensitive photoreceptors while 680nm is good for red sensitive photoreceptors.

The monolithic VCSEL array structure 102 with its two linear arrays 108 and 110 can be made in many different ways. A high density array of vertical cavity surface emitting lasers can emit from the epitaxial side of the array, as described in US-A-5 062 115. A high density array of vertical cavity surface emitting lasers can emit from the substrate side of the array, as described in US-A-5 216 263. In both cases, all elements of the array emit at substantially the same wavelength and have no provision for control of the polarization state.

The array structure 102 may be either a monolithic diode laser array or two non-monolithic laser subarrays closely spaced into a single integrated array. With either type of source, the laser array structure 102 provides a substantially common spatial origin for both laser beams.

Returning to the highlight color printer 100 shown in Figure 4, the monolithic array structure 102 emits a linear array of modulated first wavelength beams 118 and a linear array of modulated second wavelength beams 120. Only the chief rays are shown for clarity.

The beams 118 and 120 are slightly diverging from the array 102 and are focused and magnified by an imaging lens 122 as discussed previously. A wavelength beam separator 124 separates the laser beams 118 and 120 after they pass through the imaging lens 112.

The wavelength beam separator 124 is a wavelength selective, multiple layer film, having the optical characteristics shown in Figure 6. Thus, for two wavelengths appropriately matched to the optical characteristics of the beam separator 124, e.g. 600nm and 650nm, a beam of one wavelength will be transmitted while a beam of the other wavelength will be reflected. Such beam separators are well known in the art. Reference may be made to Volume 1 of "Applied Optics and Optical Engineering", (1965) edited by R. Kingslake, for example at chapter 5, number IV and chapter 8, numbers VIII and IX.

Mirrors 126 and 128 reflect the separated first wavelength laser beam 118 from the beam separator 124 onto a first photoreceptor 130, while mirror 132 reflects separated second wavelength laser beam 120 from the beam separator 124 onto a second photoreceptor 134.

Since both beams 118 and 120 are from substantially the same spatial location and have substantially parallel optical axes, similarly dimensioned beams with equal optical path lengths are input to the beam separator 124. Thus, the problem of maintaining equal optical path length for each beam reduces to the much simpler problem of maintaining substantially equal optical path lengths from the beam separator 124 to the photoreceptors 130 and 134. Substantially equal optical path lengths are set by properly positioning mirrors 126, 128 and 132. Equalization of optical path lengths results in similarly dimensioned spots at each photoreceptor 130, 134.

The imaging lens 122 forms a magnified image of each VCSEL array 108, 110 on the appropriate photoreceptor 130, 134. Although not depicted in the illustration, the path lengths from the imaging lens 122 to all photoreceptors 130, 134 are made equal so that the optical magnification of each linear array is the same in each arm of the system. A reasonable number for this distance is 533mm (21 in) which is compatible with the space allotted to one pass four colors/single polygon/single optics ROSs in current printer designs. Since adjacent linear arrays are imaged at different positions, the sagittal spacing between them can be as large as the field of view of the projection lens allows. This is because the output of each array is directed to its exposure position by the wavelength separators and mirrors as shown. Synchronization between exposures at different positions is controlled by the relative times at which the arrays are fired.

The photoreceptors 130 and 134 are charged by a charging stations (not shown) prior to exposure by beams 118 and 120 respectively. After exposure, a development station (also not shown) develops the latent image formed in the associated image area on the photoreceptor. A fully developed image is then transferred to a single sheet (not shown) at a transfer station (not shown) from each of the two photoreceptors 130 and 134. The charge, development and transfer stations are conventional in the art. Further details of xerographic stations in a multiple exposure single pass system are disclosed in US-A-4 661 901; US-A-4 791 452; and US-A-4 833 503.

The printer 100 may be used for two color printing where the image created on each photoreceptor 130 and 134 corresponds to a different system color. This color printing is typically black and a highlight color.

The printer 100 shown in Figure 4 is a highlight color xerographic printer with a monolithic structure of two linear arrays 108, 110 of vertical cavity surface emitting lasers (VCSELs) 112, 116 to expose a position on two photoreceptors 130, 134.

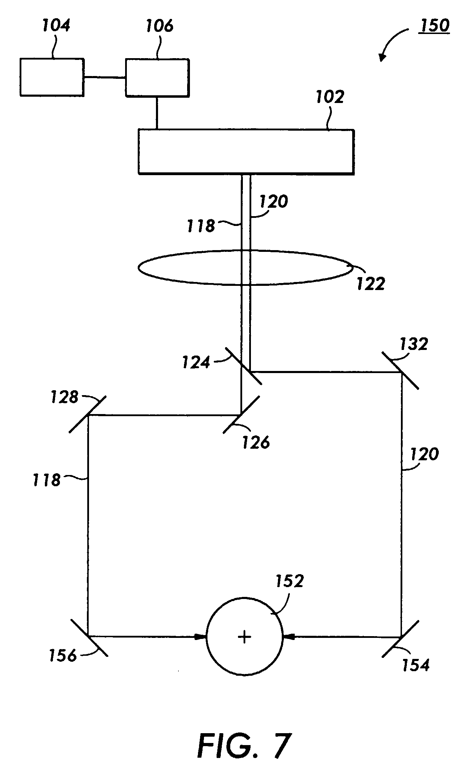

The printer 150 shown in Figure 7 is a highlight color xerographic printer where the two linear arrays 108, 110 in the monolithic VCSEL array structure 102 expose two positions on a single photoreceptor 152 to enable one pass highlight color printing.

The printer 150 shown in Figure 7 shows an alternate embodiment of printer 100 shown in Figure 4 wherein the light beams 118 and 120 are directed onto a single photoreceptor 152 by reflecting mirrors 154 and 156. Laser array structure 102 emits a first wavelength beam 118 and a second wavelength beam 120. The video signals for both beams are modulated by Electronic Sub System (ESS) 104 and drive circuit 106 as previously described. The two beams 118 and 120 are focused and magnified by imaging lens 122 and separated by wavelength beam separator 124. Mirrors 126 and 128 reflect the separated first wavelength laser beam 118 from the beam separator 124, while mirror 132 reflects separated second wavelength laser beam 120 from the beam separator 124. Thus far, the highlight color xerographic printer 150 of Figure 7 is the same as the highlight color xerographic printer 100 of Figure 4.

However in the highlight color xerographic printer 150 of Figure 7, the first wavelength laser beam 118 is reflected from mirror 128 and then reflected from mirror 156 onto one area of the photoreceptor 152. The second wavelength laser beam 120 is reflected from mirror 132 and then reflected from mirror 154 onto a separate area of the photoreceptor 152. As noted previously, the subsequent charge, development and transfer stations are conventional in the art.

The wavelength beam separator 124 shown in Figures 4 and 7 transmits the first wavelength beam 118 while reflecting the second wavelength beam 120. An alternate means of separating beams of different wavelength is a pair of wavelength bandpass filters. However, a beam splitter is required and there is a resulting halving of the intensity of the beams upon the photoreceptors.

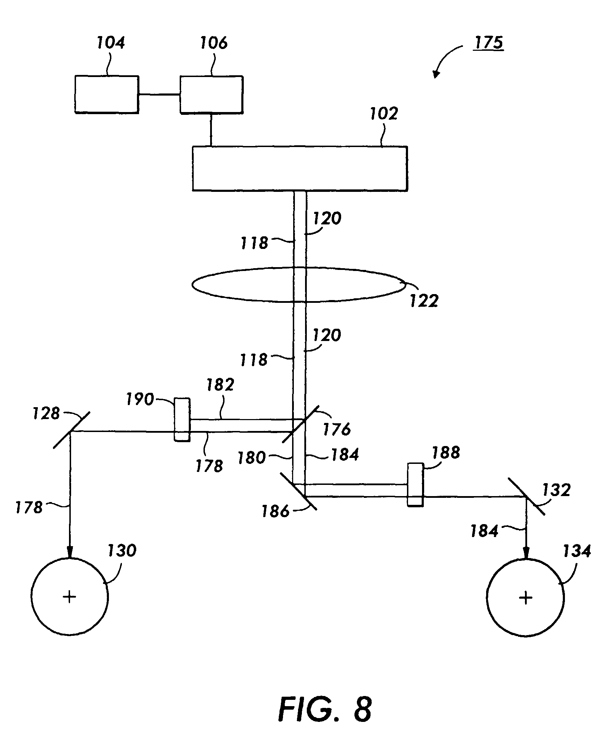

The printer 175 shown in Figure 8 shows an alternate embodiment of printer 100 of Figure 4 wherein narrow bandpass filters 188, 190 are utilized to separate the light beams 118, 120 at different wavelengths. Laser array structure 102 of Figure 8 emits a first wavelength beam 118 and a second wavelength beam 120. The video signals for both beams are modulated by Electronic Sub System (ESS) 104 and drive circuit 106. The two beams 118 and 120 are focused and magnified by imaging lens 122. Thus far, the highlight color xerographic printer 150 of Figure 8 is the same as the highlight color xerographic printer 100 of Figure 4.

The two beams 118 and 120 are then split by beam splitter 176. The first wavelength beam 118 is divided into beam 178 which is reflected from the beam splitter 176 and beam 180 which is transmitted through the beam splitter 176. The beams 178 and 180 have the same wavelength as the original first wavelength beam 118 but only half the intensity. Similarly, the second wavelength beam 120 is divided into beam 182 which is reflected from the beam splitter 176 and beam 184 which is transmitted through the beam splitter 176. The beams 182 and 184 have the same wavelength as the original second wavelength beam 120 but only half the intensity.

The beam splitter 176 is a partially transparent metallic film or multiple layer dielectric film constructed such that half the intensity of an incident beam is transmitted while the other half is reflected. Such beam splitters are well known to those skilled in the art and are frequently used optical components. Splitting both beams can be advantageous in spite of the increased power loss because it enables use of relatively low cost bandpass filters for beam separation.

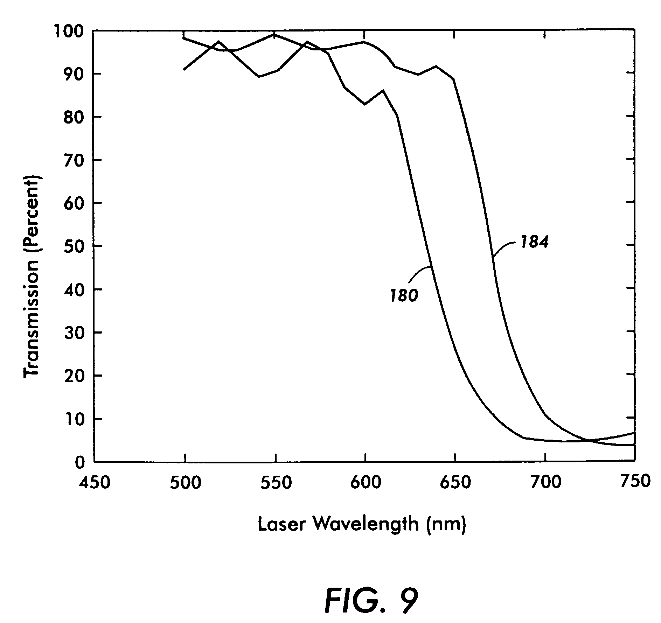

After transmission through the beam splitter 176, first wavelength light beam 180 and second wavelength light beam 184 are reflected by mirror 186 onto first narrow bandpass filter 188. The first narrow bandpass filter 188 has transmission characteristics as shown in Figure 9. The narrow bandpass filter is made from a material which blocks light beam of one wavelength while transmitting light of another wavelength. The filter 188 blocks first wavelength light beam 180 while transmitting second wavelength light beam 184.

Similarly, after reflection from the beam splitter 176, first wavelength light beam 178 and second wavelength light beam 182 are directed onto second narrow bandpass filter 190. Second narrow bandpass filter 190 has the opposite transmission characteristics as first filter 188. The filter 190 blocks second wavelength light beam 182 while transmitting first wavelength light beam 178.

Then returning to the same optical path and optical components as the printer 100 of Figure 4, the first wavelength light beam 178 is reflected by mirror 128 onto the first photoreceptor 130 while the second wavelength light beam 184 is reflected by mirror 132 onto the second photoreceptor 134 in Figure 8.

Outside of mirrors to reflect the beams and adjust the optical path length, the distinction between the printer 100 of Figure 4 and the printer 175 of Figure 8 is that the wavelength beam separator 124 of Figure 4 is replaced with a beam splitter 176 and two narrow bandpass filters 188 and 190 of Figure 8 and that the beams 178, 184 on the photoreceptors 130, 134 in printer 175 of Figure 8 will have half the intensity of the comparable beams 118, 120 on the photoreceptors 130, 134 in printer 100 of Figure 4 for the same intensity emitted by elements in array 102.

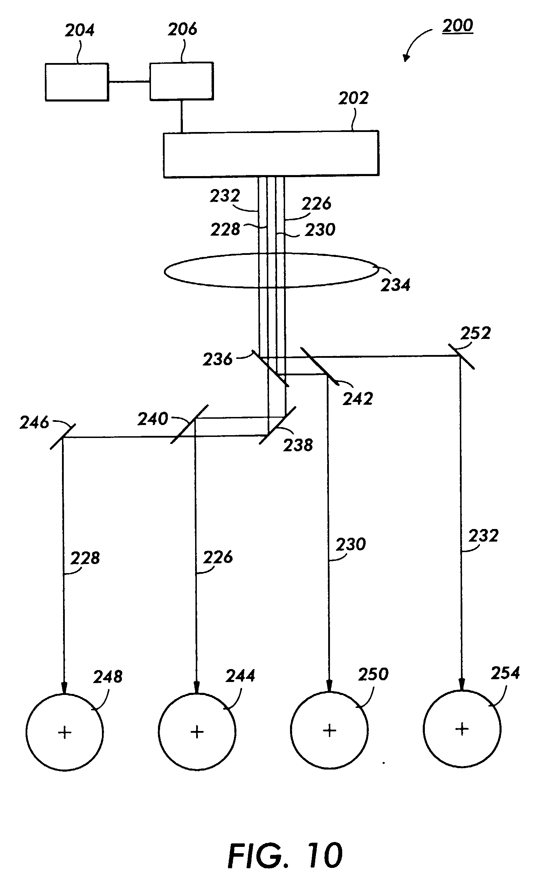

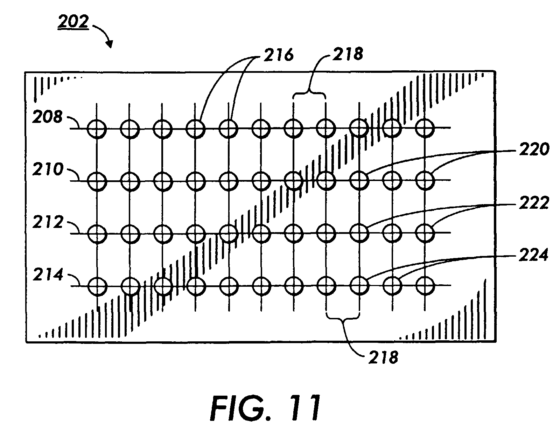

A full color printer 200 is shown in Figure 10. The printer 200 utilizes a monolithic structure 202 (Figure 11) of four linear arrays 208, 210, 212, 214 of vertical cavity surface emitting lasers (VCSELs) 216, 220, 222, 224 to expose four photoreceptors 244, 248, 250, 254 to enable one pass full color printing. Each linear array 208, 210, 212, 214 emits at one of four different wavelengths.

The monolithic array structure 202 of the printer 200 is selectively addressed by video image signals processed through Electronic Sub System (ESS) 204 and controlled by drive circuit 206 to produce a modulated beam from each individual VCSEL in the array.

The laser array structure 202 of Figure 11 consists of four linear VCSEL arrays 208, 210, 212 and 214 aligned and arranged in parallel with each other within the monolithic array 202. Individual VCSELs within each of the four linear arrays are arranged with equal center to center spacing 216 between individual VCSELs. Individual VCSELs in each linear array are aligned with individual VCSELs in the other linear arrays in the direction orthogonal to the common linear direction of the arrays. In the printer 200 (Figure 10), the monolithic array structure 202 is aligned so as to form four parallel scan lines orthogonal to the slow scan direction. In the preferred embodiment, the monolithic laser array structure 202 is symmetrically placed with respect to the optical axis of the imaging lens 234 in both the slow scan and fast scan directions.

The VCSELs 216 in the linear array 208 emit light at a first wavelength. The VCSELs 220 in the linear array 210 emit light at a second wavelength. The VCSELs 222 in the linear array 212 emit light at a third wavelength. The VCSELs 224 in the linear array 214 emit light in a fourth wavelength. The range of wavelengths is chosen to accommodate the responsivity of the photoreceptors 244, 248, 250, 254 and their proximity is limited by the selectivity of the optical filters.

The VCSEL array structure 202 with its four linear arrays 208, 210, 212 and 214 may be either a monolithic diode laser array or two non-monolithic laser subarrays closely spaced into a single integrated array, as discussed previously.

The monolithic array structure 202 emits a linear array of modulated first wavelength beams 226, modulated second wavelength beams 228, modulated third wavelength beams 230 and modulated fourth wavelength beams 232. Only the chief rays are shown for clarity.

The beams 226, 228, 230 and 232 are diverging from the array 202 and are focused by an imaging lens 234 as discussed previously. A first wavelength beam separator 236, separates the laser beams 226, 228, 230 and 232 after they pass through the imaging lens 234. The beam separator 236 is a wavelength selective multiple layer films having optical characteristics similar to those shown in Figure 6.

The first wavelength beam separator 236 separates the first and second wavelength beams 226 and 230 from the third and fourth wavelength beams 228 and 232. The first and second wavelength beams 226 and 230 transmit through the first beam separator 236, reflect off mirror 238 and into the second wavelength beam separator 240 while third and fourth wavelength beams 228 and 232 reflect off the first beam separator 236 and into the third wavelength beam separator 242.

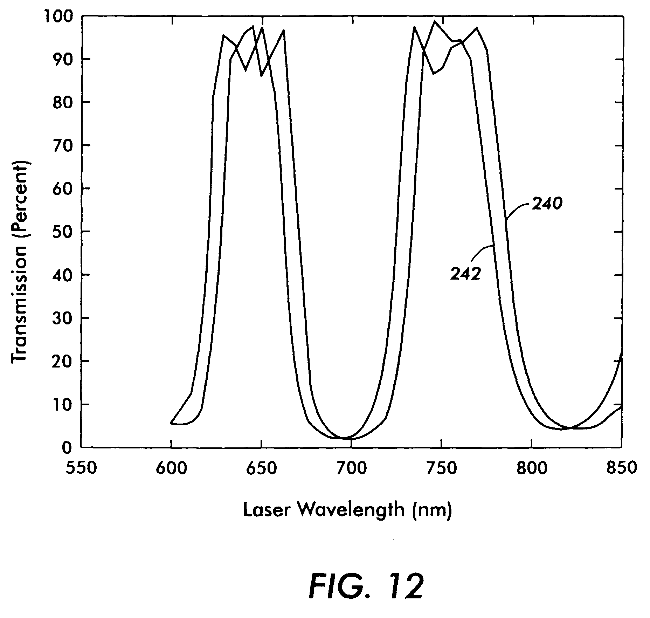

The second and third wavelength beam separators 240 and 242 are wavelength selective multiple layer films having optical characteristics similar to those shown in Figure 12.

Thus, the second beam separator 240 will reflect the beam 226 of the first wavelength onto a first photoreceptor 244. The beam separator 240 will transmit the beam 228 of the second wavelength which is reflected by mirror 246 onto the second photoreceptor 248.

The third beam separator 242 will reflect the beam 228 of the third wavelength onto a third photoreceptor 250. The beam separator 242 will transmit the beam 232 of the fourth wavelength which is reflected by mirror 252 onto the fourth photoreceptor 254.

Since each laser beam is independently modulated with image information, a distinct latent image is simultaneously printed on each photoreceptor 244, 248, 250, 254. As noted previously, the subsequent charge, development and transfer stations are conventional in the art. Thus apparatus 200 may be used for full color reproduction, wherein the image on each photoreceptor 244, 248, 250, 254 corresponds to a different system color.

Since all of the beams 226, 228, 230 and 232 are from substantially the same focal plane and have substantially parallel optical axes, similarly dimensioned beams are input to the first wavelength beam separator 236. Thus the problem of maintaining equal optical path lengths for each beam reduces to the much simpler problem of maintaining substantially equal optical path lengths from the first wavelength beam separator 236 to the individual photoreceptors. Substantially equal optical path lengths are set by adjusting the individual optical path lengths by properly positioning mirrors 238, 240, 242, 246 and 252.

As shown in the highlight color printer 150 of Figure 7, the highlight color printer 100 of Figure 4 can be adapted with the addition of mirrors to expose two separated positions on a single photoreceptor rather than multiple photoreceptors. Similarly, the full color printer 200 of Figure 10 can be adapted with the addition of mirrors to expose four separated positions on a single photoreceptor rather than multiple photoreceptors as illustrated. Alternatively, the full color printer 200 of Figure 10 can be adapted without additional mirrors to expose four separated positions on a single photoreceptive belt (not shown) rather than multiple photoreceptive drums as illustrated.

Sets comprising a beam splitter and two wavelength bandpass filters for wavelength separation could be utilized in the color xerographic line printer for the initial wavelength separation and the two subsequent wavelength separations. However, the resulting intensity of each beam upon the photoreceptor is now a quarter of its intensity from the multiple laser array light source.

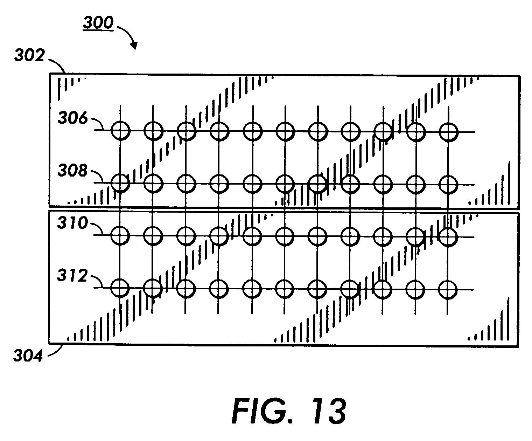

Another laser array structure 300 is shown in Figure 13. The structure 300 is a non-monolithic combination of two monolithic structures 302 and 304 of VCSEL arrays, as mentioned previously. Each monolithic array structure 302, 304 contains two linear arrays of VCSELs emitting at different wavelengths. Monolithic array structure 302 has linear VCSEL array 306 emitting at a first wavelength and linear VCSEL array 308 emitting at a second wavelength. Monolithic array structure 304 has linear VCSEL array 310 emitting at a third wavelength and linear VCSEL array 312 emitting at the fourth wavelength.

Thus, the laser array structure 300 of Figure 13 emits four different wavelengths, similar to the monolithic array structure 202 shown in Figure 11. The advantage of this non-monolithic combination is that each monolithic array structure 302 and 304 needs to emit only two wavelengths, thereby relaxing the requirements on the layer growths.

The sagittal separation between adjacent arrays on different monolithic array structures can be much larger than the tangential spacing between the VCSEL elements, since each array is imaged at a different exposure position. The sagittal spacing between monolithic subarray structures is minimized by locating the linear arrays near the edge of each monolithic subarray structure. However it is important to have array elements on different monolithic subarray structures aligned sagitally in order to avoid scan line alignment on the four development stations. Precise alignment of the scan lines at different stations is required since the four images are transferred serially to paper or an intermediate transfer belt. A non-monolithic combination of monolithic dual wavelength subarray structures is preferred to an all monolithic structure source because it minimizes the wavelength range over which the active layer must provide gain and grown laser mirrors must provide high reflectivity within each VCSEL in each monolithic structure.

Gain guided VCSELs are well suited for the color printing applications of the embodiments because they exhibit essentially no astigmatism. In addition, variation of the imaging lens' focal length due to the wavelength dependence of its refractive index can be compensated by (1) adding a glass plate to one array or by (2) monolithically adding an appropriate diffractive lens to individual elements of one array, as described in US-A-5 073 041.

A monolithic structure of two or four VCSEL arrays of the present invention is cheaper to manufacture than the two or four separate LED print bars of the prior art. The VCSEL arrays are accurately aligned within the monolithic structure as opposed to the prior art four separate LED print bars which must be accurately aligned with each other.

A monolithic structure of two or four VCSEL arrays considerably reduces the size and total spatial volume of a color xerographic printer. Also monolithic source arrays are cost-effective since assemblies of multiple chips is reduced or in some cases eliminated.

The imaging lens of the present invention can compensate for focal length dispersion either by color correcting the lens or by inserting a glass plate into the beams emitted by an array or by monolithically adding an appropriate diffractive lens to individual elements of an array. The complex and expensive optics of a prior art ROS system are reduced to the imaging lens of the present invention.

## Claims

1. A color xerographic line printer (100; 150; 175; 200) comprising:-
at least one photoreceptor (130, 134; 152; 244, 248, 250, 254),
at least two linear laser arrays (108, 110; 208, 210, 212, 214) for emitting at least two modulated light beams (118, 120; 226, 228, 232, 232) of differing wavelengths,
imaging lens means (122; 234) for imaging each modulated light beam (118, 120; 226, 228, 230, 232) onto at least one of the photoreceptor (130, 134; 152; 244, 248, 250, 254), and
wavelength separation means (124; 176, 188, 190; 236, 242, 242) for separating each modulated light beam (118, 120; 226, 228, 232, 232) onto a specific region of said at least one photoreceptor (130, 134; 152; 244, 248, 250, 254) to simultaneously expose a full scan line thereon.

2. A printer according to claim 1 comprising at least two photoreceptors (130, 134; 244, 248, 250, 254), the wavelength separation means (124; 236, 240, 242) separating each modulated light beam (118, 120; 226, 228, 230, 232) onto respective different regions on respective photoreceptors (130, 134; 244, 248, 250, 254).

3. A printer (150) according to to claim 1 for printing highlight color comprising a single photoreceptor (152) and first and second linear laser arrays (108, 110), the wavelength separation means (124) separating the first and second modulated light beams (118, 120) onto respective first and second regions of the photoreceptor (152).

4. A printer (100) according to claim 1 for printing a highlight color comprising first and second photoreceptors (130, 134) and first and second linear laser arrays (108, 110), the wavelength separation means (124) separating the first and second modulated light beams (118, 120) onto respective first and second photoreceptors (130, 134).

5. A printer according to claim 1 for printing full color comprising a single photoreceptor, first, second, third and fourth linear laser arrays (208, 210, 212, 214) for emitting respective first, second, third and fourth modulated light beams (226, 228, 230, 232), the wavelength separation means (236, 240, 242) for separating the first, second, third and fourth modulated light beams (226, 228, 230, 232) onto respective first, second, third and fourth regions of the photoreceptor.

6. A printer (200) according to claim 1 for printing full color comprising first, second, third and fourth photoreceptors (244, 248, 250, 254) and first, second, third and fourth linear laser arrays (208, 210, 212, 214), the wavelength separation means (236, 240, 242) separating the first, second, third and fourth modulated light beams (226, 228, 230, 232) onto respective ones of the first, second, third and fourth photoreceptors (244, 248, 250, 254).

7. A printer according to any one of the preceding claims wherein the wavelength separation means is a multiple layer film beam separator (124; 236, 240, 242).

8. A printer according to any one of claims 1 to 6 wherein the wavelength separation means is a beam splitter (176) and two bandpass filters (188, 190).

9. A printer according to claim 5 or 6 wherein the wavelength separation means is three sets of multiple layer film beam separators (236, 240, 244).

10. A printer according to claim 5 or 6 wherein the wavelength separation means is three sets of a beam splitter (176) and two bandpass filters (188, 190).

11. A printer according to claim 5 or 6 wherein the wavelength separation means is at least one set of a multiple layer film beam separator (124) and at least one set of a beam splitter (176) and two bandpass filters (188, 190).

## Patentansprüche

1. Xerographischer Linienfarbdrucker (100; 150; 175; 200), der aufweist:
mindestens einen Fotorezeptor (130, 134; 152; 244, 248, 250, 254),
mindestens zwei lineare Laserfelder (108, 110; 208, 210, 212, 214) zum Emittieren mindestens zwei modulierter Lichtstrahlen (118, 120; 226, 228, 232, 232) unterschiedlicher Wellenlängen,
eine Abbildungslinseneinrichtung (122; 234) zum Abbilden jedes modulierten Lichtstrahls (118, 120; 226, 228, 230, 232) auf mindestens einen Fotorezeptor (130, 134; 152; 244, 248, 250, 254) und
eine Wellenlängenseparationseinrichtung (124; 176, 188, 190; 236, 242, 242) zum Separieren jedes modulierten Lichtstrahls (118, 120; 226, 228, 232, 232) auf einen spezifischen Bereich des mindestens einen Fotorezeptors (130, 134; 152; 244, 248, 250, 254), um simultan eine volle Abtastlinie darauf zu beleuchten.

2. Drucker nach Anspruch 1, der mindestens zwei Fotorezeptoren (130, 134; 244, 248, 250, 254) aufweist, wobei die Wellenlängenseparationseinrichtung (124; 236, 240, 242) jeden modulierten Lichtstrahl (118, 120; 226, 228, 230, 232) auf jeweilige unterschiedliche Bereiche auf jeweiligen Fotorezeptoren (130, 134; 244, 248, 250, 254) separiert.

3. Drucker (150) nach Anspruch 1 zum Drucken einer Hervorhebungsfarbe, der einen einzelnen Fotorezeptor (152) und ein erstes und ein zweites lineares Laserfeld (108, 110) aufweist, wobei die Wellenlängenseparationseinrichtung (124) den ersten und den zweiten modulierten Lichtstrahl (118, 120) auf jeweilige erste und zweite Bereiche des Fotorezeptors (152) separiert.

4. Drucker (100) nach Anspruch 1 zum Drucken einer Hervorhebungsfarbe, der einen ersten und einen zweiten Fotorezeptor (130, 134) und ein erstes und ein zweites lineares Laserfeld (108, 110) aufweist, wobei die Wellenlängenseparationseinrichtung (124) den ersten und den zweiten modulierten Lichtstrahl (118, 120) auf den jeweiligen ersten und zweiten Fotorezeptor (130, 134) separiert.

5. Drucker nach Anspruch 1 zum Vollfarbdrucken, der einen einzelnen Fotorezeptor, ein erstes, ein zweites, ein drittes und ein viertes lineares Laserfeld (208, 210, 212, 214) zum Emittieren jeweiliger erster, zweiter, dritter und vierter, modulierter Lichtstrahlen (226, 228, 230, 232) aufweist, wobei die Wellenlängenseparationseinrichtung (236, 240, 242) den ersten, den zweiten, den dritten und den vierten modulierten Lichtstrahl (226, 228, 230, 232) auf die jeweiligen, ersten, zweiten, dritten und vierten Bereiche des Fotorezeptors separiert.

6. Drucker (200) nach Anspruch 1 zum Vollfarbdrucken, der einen ersten, zweiten, dritten und vierten Fotorezeptor (244, 248, 250, 254) und ein erstes, zweites, drittes und viertes lineares Laserfeld (208, 210, 212, 214) aufweist, wobei die Wellenlängenseparationseinrichtung (236, 240, 242) den ersten, den zweiten, den dritten und den vierten modulierten Lichtstrahl (226, 228, 230, 232) auf jeweilige der ersten, zweiten, dritten und vierten Fotorezeptoren (244, 248, 250, 254) separiert.

7. Drucker nach einem der vorhergehenden Ansprüche, wobei die Wellenlängenseparationseinrichtung ein Mehrschichtfilm-Strahlseparator (124; 236, 240, 242) ist.

8. Drucker nach einem der Ansprüche 1 bis 6, wobei die Wellenlängenseparationseinrichtung ein Strahlteiler (176) und zwei Bandpaßfilter (188, 190) ist.

9. Drucker nach Anspruch 5 oder 6, wobei die Wellenlängenseparationseinrichtung drei Sätze von Mehrschichtfilm-Strahlseparatoren (236, 240, 244) ist.

10. Drucker nach Anspruch 5 oder 6, wobei die Wellenlängenseparationseinrichtung drei Sätze eines Strahlteilers (176) und zwei Bandpaßfiltern (188, 190) ist.

11. Drucker nach Anspruch 5 oder 6, wobei die Wellenlängenseparationseinrichtung mindestens ein Satz eines Mehrschichtfilm-Strahlseparators (124) und mindestens ein Satz eines Strahlteilers (176) und zwei Bandpaßfilter (188, 190) ist.

## Revendications

1. Imprimante ligne xérographique couleur (100 ; 150 ; 175 ; 200) comprenant :-
au moins un photorécepteur (130, 134 ; 152 ; 244, 248, 250, 254),
au moins deux rangées de lasers linéaires (108, 110 ; 208, 210, 212, 214) pour émettre au moins deux faisceaux lumineux modulés (118, 120 ; 226, 228, 232, 232) de longueurs d'onde différentes,
un moyen de lentille de formation d'image (122 ; 234) pour former en image chaque faisceau lumineux modulé (118, 120 ; 226, 228, 230, 232) sur au moins un des photorécepteurs (130, 134 ; 152 ; 244, 248, 250, 254), et
un moyen de séparation de longueur d'onde (124 ; 176, 188, 190 ; 236, 242, 242) pour séparer chaque faisceau lumineux modulé (118, 120 ; 226, 228, 232, 232) sur une région spécifique dudit au moins un photorécepteur (130, 134 ; 152 ; 244, 248, 250, 254) pour exposer simultanément sur ceux-ci une ligne de balayage complète.

2. Imprimante selon la revendication 1, comprenant au moins deux photorécepteurs (130, 134 ; 244, 248, 250, 254), le moyen de séparation de longueur d'onde (124 ; 236, 240, 242) séparant chaque faisceau lumineux modulé (118, 120 ; 226, 228, 230, 232) sur des régions différentes respectives sur des photorécepteurs respectifs (130, 134 ; 244, 248, 250, 254).

3. Imprimante (150) selon la revendication 1 pour imprimer une couleur de mise en évidence ou de surlignement comprenant un seul photorécepteur (152) et des première et seconde rangées de lasers linéaires (108, 110), le moyen de séparation de longueur d'onde (124) séparant les premier et second faisceaux lumineux modulés (118, 120) sur des première et seconde régions respectives du photorécepteur (152).

4. Imprimante (100) selon la revendication 1 pour imprimer une couleur de mise en évidence ou de surlignement comprenant des premier et second photorécepteurs (130, 134) et des première et seconde rangées de lasers linéaires (108, 110), le moyen de séparation de longueur d'onde (124) séparant les premier et second faisceaux lumineux modulés (118, 120) sur les premier et second photorécepteurs respectifs (130, 134).

5. Imprimante selon la revendication 1 pour imprimer une couleur pleine comprenant un seul photorécepteur, des première, seconde, troisième et quatrième rangées de lasers linéaires (208, 210, 212, 214) pour émettre des premier, second, troisième et quatrième faisceaux lumineux modulés respectifs (226, 228, 230, 232), le moyen de séparation de longueur d'onde (236, 240, 242) séparant les premier, second, troisième et quatrième faisceaux lumineux modulés (226, 228, 230, 232) sur des première, seconde, troisième et quatrième régions respectives du photorécepteur.

6. Imprimante (200) selon la revendication 1 pour imprimer une couleur pleine comprenant des premier, second, troisième et quatrième photorécepteurs (244, 248, 250, 254) et des première, seconde, troisième et quatrième rangées de lasers linéaires (208, 210, 212, 214), le moyen de séparation de longueur d'onde (236, 240,242) séparant les premier, second, troisième et quatrième faisceaux lumineux modulés (226, 228, 230, 232) sur les photorécepteurs respectifs parmi les premier, second, troisième et quatrième photorécepteurs (244, 248, 250, 254).

7. Imprimante selon l'une quelconque des revendications précédentes dans laquelle le moyen de séparation de longueur d'onde est un séparateur de faisceaux à film à couches multiples (124 ; 236, 240, 242).

8. Imprimante selon l'une quelconque des revendications 1 à 6, dans laquelle le moyen de séparation de longueur d'onde est un séparateur de faisceaux (176) et deux filtres passe-bande (188, 190).

9. Imprimante selon la revendication 5 ou 6, dans laquelle le moyen de séparation de longueur d'onde est constitué de trois ensembles de séparateurs de faisceaux à film à couches multiples (236, 240, 244).

10. Imprimante selon la revendication 5 ou 6, dans laquelle le moyen de séparation de longueur d'onde est constitué de trois ensembles d'un séparateur de faisceaux (176) et de deux filtres passe-bande (188, 190).

11. Imprimante selon la revendication 5 ou 6, dans laquelle le moyen de séparation de longueur d'onde est au moins un ensemble d'un séparateur de faisceaux à film à couches multiples (124) et au moins un ensemble d'un séparateur de faisceaux (176) et de deux filtres passe-bande (188, 190).
